# NEW EUROPEAN PATENT SPECIFICATION

(11) **EP 3 869 035 B2**
(45) Date of publication and mention of the opposition decision: **11.02.2026**
(45) Mention of the grant of the patent: 30.11.2022
(21) Application number: 20380009.9
(22) Date of filing: 21.02.2020
(51) Int. Cl.: F03D 80/40

(54) **BLADE FOR A ROTOR OF A WIND TURBINE AND MANUFACTURING METHOD THEREOF**
SCHAUFEL FÜR EINEN ROTOR EINER WINDTURBINE UND HERSTELLUNGSVERFAHREN DAFÜR
PALE POUR UN ROTOR D'ÉOLIENNE ET SON PROCÉDÉ DE FABRICATION

(43) Date of publication of application: 25.08.2021
(73) Proprietor: SIEMENS GAMESA RENEWABLE ENERGY INNOVATION & TECHNOLOGY, S.L., 31621 Sarriguren (Navarra) (ES)
(72) Inventor: MARCH NOMEN, Victor, 08194 Les Fonts (ES); GUERRERO BUITRAGO, Olimpio, 31013 Artica (ES); IZU BELLOSO, Pilar, 31007 Pamplona (ES)
(74) Representative: SGRE-Association

(56) References cited:
- EP-A1- 2 754 891
- EP-A1- 3 530 938
- WO-A1-2013/128682
- DE-U1- 202018 102 696
- US-A1- 2013 149 154

## Description

### OBJECT OF THE INVENTION

The present subject matter relates generally to wind turbines blades and, more particularly, to an anti and/or de-icing blade and to a manufacturing method for said blade which yields a simpler and cheaper to manufacture anti and/or de-icing blade which is reliable, effective and accurate for blades comprising multiple heating elements.

### BACKGROUND OF THE INVENTION

Wind turbine blades are the core components used by modern wind turbines to capture wind energy. The aerodynamic characteristics of the blades have a crucial impact on the efficiency of wind turbines. When the wind turbine is operated in rainy or snowy weather or in a humid environment during the cold season, ice on the surface of the blade may occur. Icing will change the existing aerodynamic shape of the blade, which will cause harm to the safe operation of the wind turbine. After the surface of the blade freezes, its natural frequency changes, which causes the dynamic response behavior of the blade to change, which will cause interference to the control behavior of the control system. The integrity of the wind turbine structure itself is also affected by the frozen blades. The effects of imbalance or asymmetry increases the fatigue loads of the wind turbine.

By arranging a heating layer on the surface or inner layer of the blade, the blade can be heated to prevent ice from freezing on the surface when ice formation is to occur, or heating can be initiated after the surface has frozen to cause the ice layer on the surface to melt and achieve the purpose of deicing. The heating unit used in the existing heating anti-icing system is either uniformly disposed on the surface of the blade or divided into several heating zones along the length direction.

For anti-icing solutions, the required heat power demand per square meter is different along the blade being lower at shorter radiuses near the root of the blade and higher as the radius approaches the tip of the blade. Likewise, the required heat flux is higher closer to the leading edge and decreases gradually towards the trailing edge.

Furthermore, it may be found that the surface to be heated covers the leading edge until a certain distance towards the trailing edge, and that this distance may not be constant along the blade.

Some solutions are known for heating a blade comprising multiple resistors along the blade longitudinal axis and therebetween the leading edge and the trailing edge, wherein the heating system is installed after the manufacturing and demolding of the blade.

For example, document EP2526292B1 describes a method for connecting resistor electrodes placed at the outer surface with the required wires for injecting the power inside the blade by means of a conductive sheet in contact with a heating mat. Document EP2715128B1 describes a solution for the electrical connections of carbon fiber heating mats which are to be integrated on a finished blade. Documents EP3530938 and DE202018102696 describe a blade for a rotor of a wind turbine with an heating element layer and an electrical connector layer.

Most of the solutions known may be effective but complicated and costly.

### DESCRIPTION OF THE INVENTION

A wind turbine blade is disclosed herein with which it has been found that at least the above disadvantages relating to the prior art solutions are mitigated.

More in particular, in a first aspect of the invention there is provided a wind turbine blade for a rotor of a wind turbine, comprising a profiled contour formed by a pressure side shell and a suction side shell rigidly joined thereof, said blade comprising a blade root, a blade tip, a leading edge and a trailing edge with a chord c extending therebetween, said shells comprising:
- at least one electrical connector layer located at a first distance L1 from the blade root and extending the leading edge towards the trailing edge,
- at least one heating elements layer electrically in contact with the electrical connector layer, said heating element layer extending in a longitudinal direction therebetween the blade root and the blade tip and more proximate to the leading edge than to the trailing edge,
- glass fabric layers at least inwardly in contact with the electrical connector or with the heating elements layer,
- a connector component extending transversally through the glass fabric layers and being electrically connected with the electrical connector layer and with a metallic block,
- power wires extending longitudinally from a power source near the blade root to the connector component being electrically in contact thereof, said power wires located in at least one of the shells,
wherein the metallic blocks are drilled by an inter-connector so that the electrical connector layers from each shell are electrically connected and the blade is able to be heated by the heating elements layer when electrically fed from the power source.

In a preferred embodiment, each shell further comprises second glass fabric layers outwardly in contact with the heating elements layer or the electrical connector layer. I.e. the heating elements layer and the electrical connector layer are placed therebetween glass fabric layers.

Said heating element layer may be call also a first heating element layer hereafter.

The first heating element layer may be inwardly or outwardly in contact with the electrical connector layer. I.e. the order in which they are placed within the shell can vary as long as they are electrically in contact.

In another preferred embodiment, each shell further comprises a second electrical connector layer electrically in contact with the connector component wherein the heating element layer is therebetween the electrical connector layer and the second electrical connector layer.

In yet another preferred embodiment, the blade comprises a second heating element layer electrically and outwardly in contact with the electrical connector layer of each shell may be placed at the leading edge covering both shells, said second heating element layer extending therebetween the leading edge and the trailing edge and adjacently to the heating element layers previously installed in the mold of both shells.

In this particular embodiment, the first heating element layer before described is applied during manufacturing of the shells and this particular second heating element layer is applied after the pressure shell and suction shell are rigidly joined.

Thus, the heating element more proximate to the leading edge than to the trailing edge aforementioned may be placed after demoulding the blade, but at least the electrical connector layer, the connector component and glass fabrics layers should be placed during the manufacturing process of the shells.

Preferably, each shell comprises a plurality of electrical connector layers extending between the blade root and the blade tip beyond distance L1, wherein each electrical connector layer is electrically connected to a corresponding heating element layer and a connector component which in turn is electrically connected to a metallic block and one of the power wires, so that another region of the blade can be heated independently with different heating elements.

In a preferred embodiment, each shell comprises a plurality of electrical connector layers extending between the blade root and the blade tip beyond distance L1, wherein each electrical connector layer is electrically connected to a corresponding heating element layer and a connector component which in turn is electrically connected to a metallic block and one of the power wires, so that another region of the blade can be heated independently with different heating elements.

In the embodiment above mentioned, a plurality of heating elements layers is placed between the blade root and the blade tip, and each end of said heating elements layers electrical is electrically connected to a corresponding electrical connector layer which in turn is connected to a connector component which in turn is electrically connected to a metallic block and one of the power wires, so that each region of the blade comprising heating elements layer can be heated independently.

Preferably, the heating element is a carbon fibre with a biaxial structure, ± 45° or carbon veil respect to the blade longitudinal direction.

The electrical connector layer may preferably be a copper or aluminum mesh, or any composite materials with metallic additives or wires.

Additionally, said electrical connector layer is 20-400 mm wide and 50-500 µm of thickness.

In a second aspect of the invention there is provided a method for manufacturing the aforementioned blade, wherein during manufacturing of each shell and before demolding, the method comprises, at least:
a) placing at least one electrical connector on a mold with the contour profile of the corresponding shell and connect said electrical connector layer to the connector component thereof,
b) applying glass fabrics layers in a way they are placed inwardly or outwardly in contact with respect to said electrical connector layer, so that if outwardly in contact they are placed in the mold before the electrical connector layer, and if inwardly in contact they are placed in the mold after the electrical connector layer.

In a preferred embodiment, the method further comprises the step of connecting the metallic block and the power wires to the connector component during manufacturing of each shell.

In another embodiment, the metallic block and the power wires may be also placed after shell infusion and curing.

In a preferred embodiment, the method further comprises the step of applying a heating element layer electrically in contact outwardly or inwardly to the electrical connector layer, during the manufacturing of each shell and before shell infusion and curing.

In another preferred embodiment, said heating element layer is placed after the shells have been rigidly joined and after demolding. This embodiment, may comprise applying a plastic adhesive tape in a region on the leading edge during the manufacturing of each shell and before demolding, and after the shells have been rigidly joined together the heating elements layer are placed on the region where the plastic adhesive tape. was originally placed, so that they are electrically connected with the electrical connector layer and covering the leading edge with an additional local infusion and curing where the heating elements have been placed at the leading edge region.

Finally, in a preferred embodiment after the shells have been rigidly joined, the metallic blocks are drilled with the inter-connector, so that the electrical connector layers from each shell are electrically connected and the blade is able to be heated by the heating elements layer when electrically fed from the power source.

Said plurality of different heating elements layers are placed along the blade between the blade root and the blade tip, all the metallic blocks necessary are drilled with inter-connector at every end of the heating elements. The two electrically connected metallic blocks with the inter-connector provide an electrical terminal at each specific radius, so that can be fed by the power wires. It is worthy to mention that each heating element must be electrically connected to the two different wires, so that voltage coming from the blade root and transmitted through the power wires can be applied to all the heating elements.

### DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:
- Figure 1: Shows a front view of a preferred embodiment of the blade where it can be seen the heating elements layers extending therebetween the blade root and the blade tip.
- Figure 2: Shows a partial view of FIG.1 illustrating a first cross section at A-A' and a second cross section B-B'.
- Figure 3: Shows a detailed view of cross section A-A' according to a first embodiment of the invention.
- Figure 4: Shows a detailed view of cross section A-A' according to a second embodiment of the invention.
- Figure 5: Shows a detailed view of cross section B-B' according to a first embodiment of the invention represented at FIG.3.
- Figure 6: Shows a detailed view of cross section B-B' according to the second embodiment of the invention if Figure 4.
- Figure 7A: Shows a cross-sectional side view at section A-A' according to an embodiment of the invention, clearly showing the metallic blocks (11) drilled by an inter-connector (12).
- Figure 7B: Shows a detailed view of cross section A-A' according to a third embodiment of the invention.
- Figure 8A: Shows a cross-sectional side view at section A-A' according to the third embodiment of figure 7B.
- Figure 8B: Shows a detailed view of cross section A-A' according to a fourth embodiment of the invention.
- Figure 9: Shows a detailed view of cross section A-A' according to a fifth embodiment of the invention.

### PREFERRED EMBODIMENT OF THE INVENTION

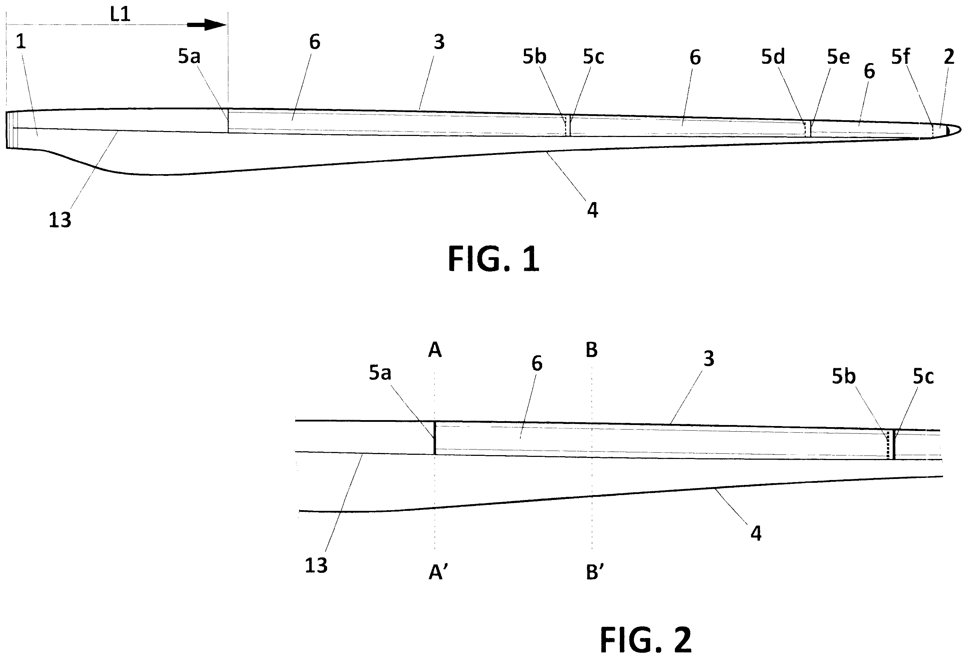

What follows is a detailed description, with the help of the attached figures 1-9 referenced above, of preferred exemplary embodiments of the object of the present invention.

The invention relates to a blade and method of manufacturing of said blade for de-icing or anti-icing purposes.

Firstly, the blade of the invention is explained below.

In a first aspect of the invention it is described a blade which can be generally applied to any blade for a wind turbine rotor that involves heating with one or more heating elements.

More in a particular, the blade may comprise, see Figure 1, a profiled contour formed by a pressure side shell (7) and a suction side shell (8) rigidly joined thereof, further comprising a blade root (1), a blade tip (2), a leading edge (3) and a trailing edge (4) with a chord extending therebetween.

Moreover, each shell may comprise at least one electrical connector layer (5) located at a first distance L1 from the blade root (1) and extending from the leading edge (3) towards the trailing edge (4), at least one heating elements layer (6) electrically in contact with the electrical connector layer (5), wherein said heating element layer (6) extending in a longitudinal direction therebetween the blade root (1) and the blade tip (2) and more proximate to the leading edge (3) than to the trailing edge (4).

Additionally, in several embodiments glass fabric layers (9) are inwardly in contact with the electrical connector layer (5) or with heating elements layer (6) -depending on the arrangement between said layers (5,6) which may be inwardly or alternatively outwardly in contact thereof-- and the blade further comprises a connector component (10) extending transversally through the glass fabric layers (9) and being electrically connected with the electrical connector layer (5) and with a metallic block (11).

the blade may further comprise power wires (13) extending longitudinally from a power source near the blade root (1) to the connector component (10) being electrically in contact thereof, said power wires (13) located in at least one of the shells (7,8), and wherein the aforementioned metallic blocks (11) are drilled by an inter-connector (12) so that the electrical connector components (10) from each shell (7,8) are electrically connected and the blade is able to be heated by the heating elements layer (9) when electrically fed from the power source

It should be appreciated that the aforementioned blade may comprise several embodiments with different combination regarding the respective order of the plurality of aforementioned layers.

Additionally, the heating elements layer (6) may be applied during the manufacturing and before infusion and curing or after the pressure shell (7) and the suction shell (8) have been rigidly joined.

In Figure 1, it is shown as example, a blade comprising three heating elements (6) on one shell. The first having electrical connectors (5a, 5b), for the second being (5c, 5d) and for the third (5e, 5f). One of each electrical connectors for each heating element (6) connected to one power wire (13) .

Figure 2, shows a partial view of the blade of Figure 1, showing two cross sections, a first cross section A-A' and a second cross section B-B'. The two electrical connectors (5a, 5b) for heating element (6) shall be connected to two different power wires (13) in order to be fed from a power source.

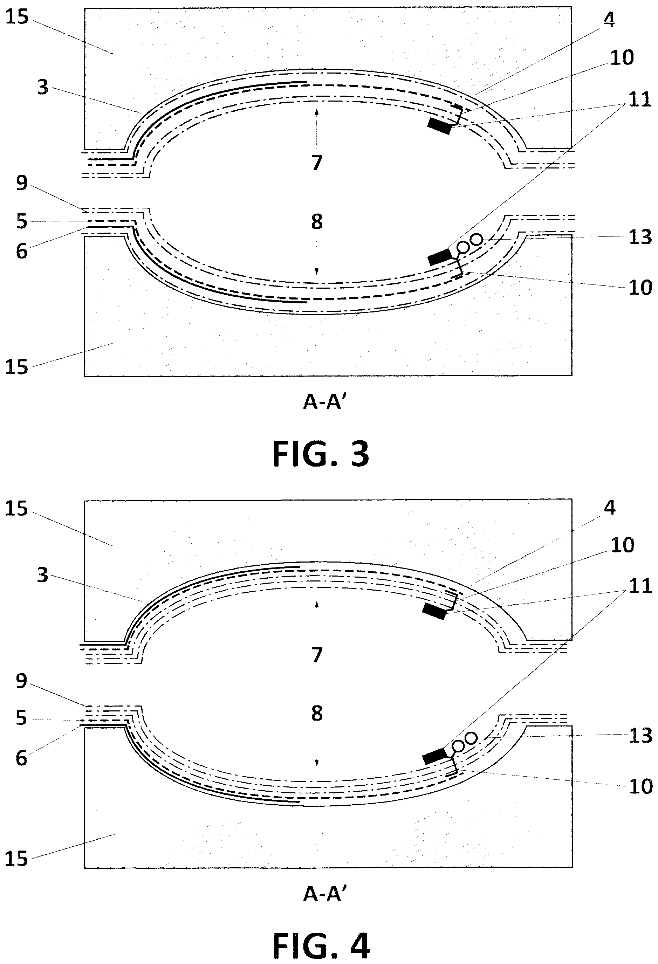

Referring now to Figure 3, in a first embodiment each shell (7,8) further comprises second glass fabric layers (9) outwardly in contact with the heating elements layer (6) or the electrical connector layer (5).

Moreover, as can be appreciated in FIG.3 the heating elements layer (6) is outwardly in contact with the electrical connector layer (5) during the manufacturing of the blade at cross section A-A'. In another embodiment the heating element layer (6) may be inwardly in contact with the electrical connector layer (5).

Referring now to Figure 4, in a second preferred embodiment it is shown that the farthest and exterior layer is the heating elements layer (6) in electrical contact with adjacent electrical connector layer (5) inwardly displaced therein.

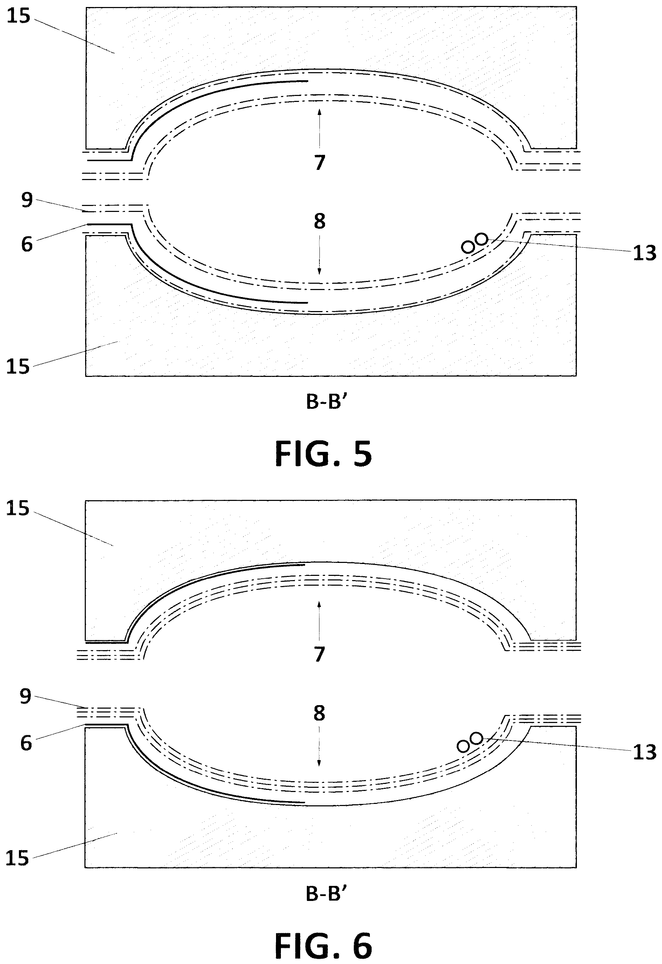

Figure 5 illustrates the second section B-B' of the blade according to the aforementioned first embodiment. It can be clearly appreciated that the electrical connector layer (5) does not extend along all the longitudinal direction of the blade but rather at the connections at the heating elements layer (6) ends, one of them clearly being section A-A' in FIG.3. Thus, it is not shown at FIG.5.

As can be appreciated in FIG.5, section B-B' comprises glass fabric layers inwardly and outwardly of the heating element layer (6).

Referring now to Figure 6 it illustrates second section B-B' of the blade according to the aforementioned second embodiment. It can be clearly appreciated that the electrical connector layer (5) does not extend along all the longitudinal direction of the blade but rather at the connections at the heating elements layer (6) ends, one of them clearly being section A-A' in FIG.6.

As can be appreciated in FIG.6, section B-B' comprises glass fabric layers inwardly of the heating element layer (6) farthest exteriorly -closer to the molds (15).

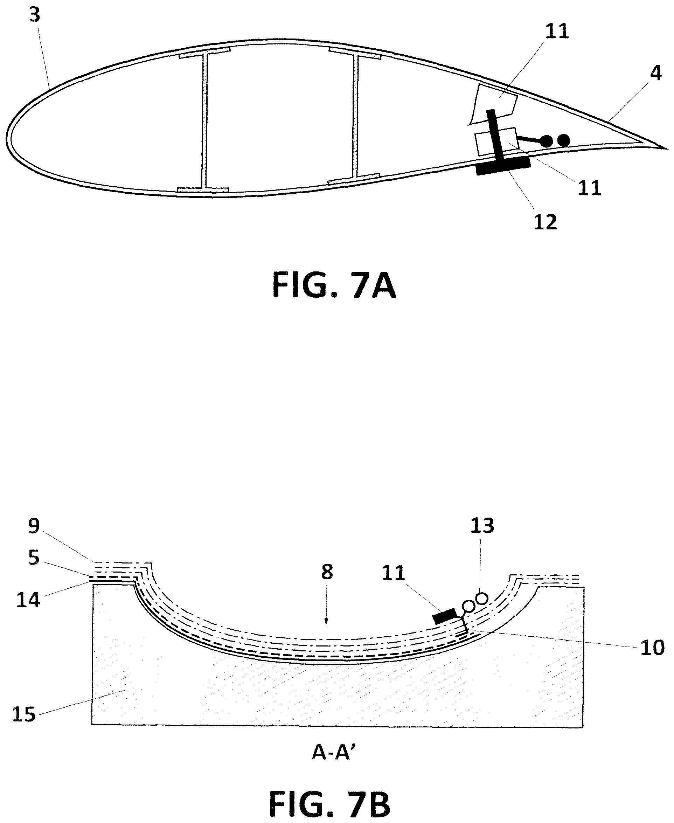

Referring now to Figure 7A it is therein illustrated a cross-sectional side view at section A-A', where it is clearly shown the aforementioned metallic blocks (11) are drilled by an inter-connector (12) so that the electrical connector layer (10) from each shell (7,8) are electrically connected and the blade is able to be heated by the heating elements layer (9) when electrically fed from the power source.

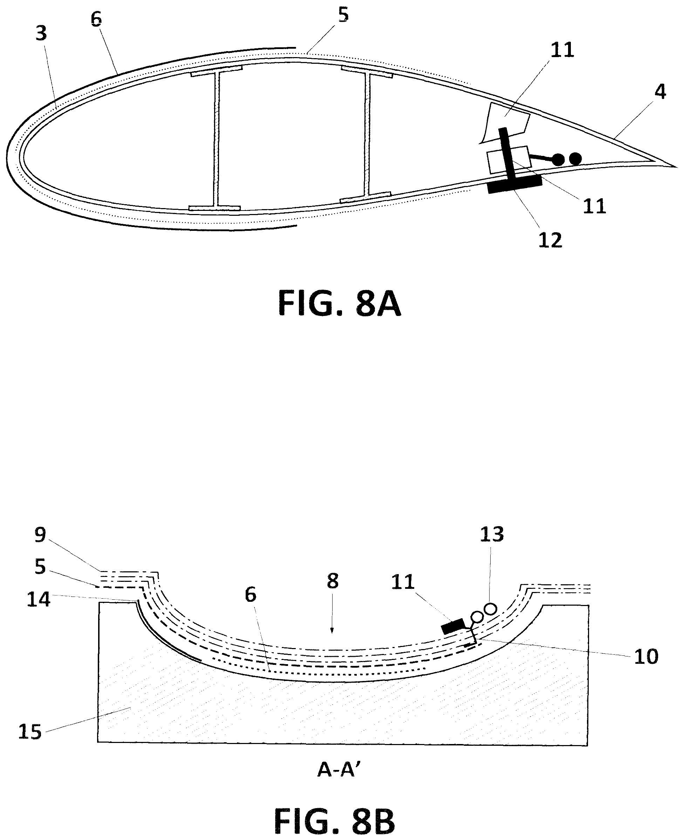

Referring now to FIG.7B and FIG.8A, it is therein exemplified a third preferred embodiment wherein the heating element layer (6) its not applied during the manufacturing of each shell (7,8). Rather a plastic adhesive tape (14) is applied farthest towards the exterior, and the heating elements layer (6) is applied after the shells (7,8) have been rigidly joined - see FIG.8A--. In this Figure 8A, it is not represented the electrical connection layer (10), which may be electrically connecting the electrical connector layer (5) with the metallic block (11).

Figure 8B illustrates a fourth embodiment wherein a first heating elements layer (6) is applied during manufacturing extending therebetween the leading edge (3) and the trailing edge (4).

Moreover, in the fourth embodiment it may be applied a plastic adhesive tape (14) in the leading edge which may be not in contact with the first heating elements (6) and after the shells (7,8) have been rigidly joined the plastic adhesive tape (14) may be removed and second heating elements layer (6) may be applied therein in the leading edge (3) in electric contact with the electric connector layer (5).

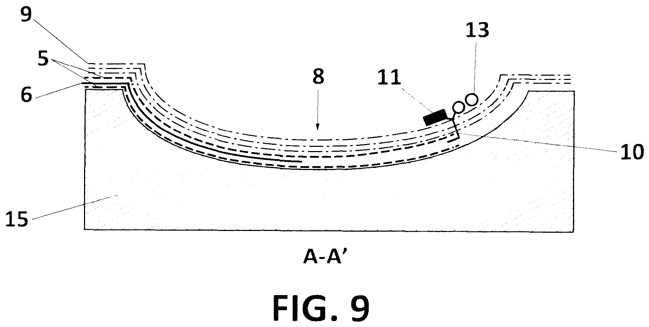

Referring to FIG 9 in a yet further embodiment each shell (7,8) may comprise two electrical connector layers (5) wherein the heating elements layer (6) may be in electrical contact with each electrical connector layers (5) and located therebetween.

In a preferred embodiment the heating element of the heating elements layer (6) may be carbon fiber with a biaxial structure, ±45° respect to the blade longitudinal direction, or carbon veil.

Furthermore, in a further preferred embodiment the electrical connector layer (5) comprises a copper or aluminum mesh, or any composite materials with metallic additives or wires.

Said electrical connectors may be 20-400 mm wide and 50-500 µm of thickness.

In a preferred embodiment each shell (7,8) comprises a plurality of electrical connector layers (5a - 5f) extending between the blade root (1) and the blade tip (2) beyond distance L1, wherein each electrical connector layer (5a - 5f) is electrically connected to a corresponding heating element layer (6) and to a connector component (10) which in turn is electrically connected to a metallic block (11) and power wires (13), so that another region of the blade can be heated independently with different heating elements -see FIG 1--.

In other words, cross section, A-A' of any of the several embodiments can be reproduced a plurality of times along the blade longitudinal direction at every end of the heating elements layer (6).

In a second aspect of the invention it is described a method for manufacturing the blade before described in any of the embodiments, wherein during the manufacturing of each shell (7,8) and before demolding the method comprises, at least:
a) placing one electrical connector layer (5) on a mold with the contour profile of the corresponding shell (7,8) and connect said electrical connector layer (5) to the connector component (10) thereof,
b) applying glass fabrics layers (9) in a way they are placed inwardly or outwardly in contact with respect to said electrical connector layer (5), so that if outwardly in contact they are placed in the mold before the electrical connector layer (5), and if inwardly in contact they are placed in the mold after the electrical connector layer (5).

In a preferred embodiment the method further comprises the step of connecting the metallic block (11) and the power wires (13) to the connector component (10) before or after the infusion and curing of each shell (7,8).

Moreover, in a preferred embodiment the method further comprises the step of applying a heating element layer (6) electrically in contact outwardly or inwardly to the electrical connector layer (5), during the manufacturing of each shell (7,8) and before their infusion and curing.

In another embodiment, the method comprises the step of applying a plastic adhesive tape (14) in a region on the leading edge (3) during the manufacturing of each shell (7,8) and before demolding, and after the shells (7,8) have been rigidly joined together apply a heating elements layer (6) on the region where the plastic adhesive tape (14) was originally placed.

Finally, after the shells (7,8) have been rigidly joined, the metallic blocks (13) may be drilled with the inter-connector (12) so that the electrical connector layers (10) from each shell (7,8) are electrically connected and the blade is able to be heated by the heating elements layer (6) when electrically fed from the power source.

## Claims

1. A blade for a rotor of a wind turbine, comprising a profiled contour formed by a pressure side shell (7) and a suction side shell (8) rigidly joined thereof, said blade comprising a blade root (1), a blade tip (2), a leading edge (3) and a trailing edge (4) with a chord extending therebetween, said shells (7,8) comprising:
- at least one electrical connector layer (5) located at a first distance L1 from the blade root (1) and extending from the leading edge (3) towards the trailing edge (4),
- at least one heating elements layer (6) electrically in contact with the electrical connector layer (5), said heating element layer (6) extending in a longitudinal direction therebetween the blade root (1) and the blade tip (2) and more proximate to the leading edge (3) than to the trailing edge (4),
- glass fabric layers (9) at least inwardly in contact with the electrical connector layer (5) or with heating elements layer (6),
- a connector component (10) extending transversally through the glass fabric layers (9) and being electrically connected with the electrical connector layer (5) and with a metallic block (11),
- power wires (13) extending longitudinally from a power source near the blade root (1) to the connector component (10) being one of these power wires (13) electrically in contact thereof, said power wires (13) located in at least one of the shells (7,8),
wherein the metallic blocks (11) are drilled by an inter-connector (12) so that the electrical connector layers (5) from each shell (7,8) are electrically connected and the blade is able to be heated by the heating elements layer (6) when electrically fed from the power source.

2. The wind turbine blade of claim 1, wherein each shell (7,8) further comprises second glass fabric layers (9) outwardly in contact with the heating elements layer (6) or the electrical connector layer (5).

3. The wind turbine blade of claim 1, wherein the heating elements layer (6) is outwardly in contact with the electrical connector layer (5).

4. The wind turbine blade of claim 1, wherein the heating elements layer (6) is inwardly in contact with the electrical connector layer (5).

5. The wind turbine blade of claim 4, comprising a second electrical connector layer (5) electrically and outwardly in contact with the electrical connector layer (5) and alternatively also being electrically in contact with the connector component (10).

6. The wind turbine blade of claim 1, wherein each shell (7,8) further comprises a second heating element layer (6) electrically and outwardly in contact with the electrical connector layer (5), said second heating element layer (6) extending therebetween the leading edge (3) and the trailing edge (4) and adjacently to the heating element layer (6).

7. The wind turbine blade of claim 1, wherein each shell (7,8) comprises a plurality of electrical connector layers extending between the blade root (1) and the blade tip (2) beyond distance L1, wherein each electrical connector layer is electrically connected to a corresponding heating element layer and a connector component which in turn is electrically connected to a metallic block and one of the power wires, so that another region of the blade can be heated independently with different heating elements.

8. The wind turbine blade of claim 1, wherein the heating element is a carbon fibre with a biaxial structure, ±45° respect to the blade longitudinal direction, carbon veil or any composite fabric including conductive components.

9. The wind turbine blade of claim 1, wherein the electrical connector is a copper or aluminum mesh, or any composite materials with metallic additives or wires.

10. The wind turbine blade of claim 1, wherein the electrical connector is 20-400 mm wide and 50-500 µm of thickness.

11. A method for manufacturing the blade of claims 1-10, wherein during manufacturing of each shell (7,8) the method comprises, at least:
a) placing one electrical connector layer (5) on a mould with the contour profile of the corresponding shell (7,8) and connect said electrical connector layer (5) to the connector component (10) thereof,
b) applying glass fabrics layers (9) in a way they are placed inwardly or outwardly in contact with respect to said electrical connector layer (5), so that if outwardly in contact they are placed in the mould before the electrical connector layer (5), and if inwardly in contact they are placed in the mould after the electrical connector layer (5).

12. The method for manufacturing of claim 11, comprising the step of installing and/or connecting the metallic block (11) and the power wires (13) to the connector component (10) during or after the manufacturing of each shell (7,8).

13. The method for manufacturing of claim 11, comprising the step of applying a heating element layer (6) electrically in contact outwardly or inwardly to the electrical connector layer (5), during the manufacturing of each shell (7,8) and before shell infusion and curing.

14. The method for manufacturing according to any one of claims 11-13, comprising the step of applying a plastic adhesive tape (14) in a region on the leading edge (3) during the manufacturing of each shell (7,8) and before demoulding, and after the shells (7,8) have been rigidly joined together apply a heating elements layer (6) on the region where the plastic adhesive tape (14) was originally placed.

15. The method for manufacturing according to any one of claims 11-14, wherein after the shells (7,8) have been rigidly joined, the metallic blocks (13) are drilled with the inter-connector (12).

## Patentansprüche

1. Blatt für einen Rotor einer Windkraftanlage, umfassend eine Profilkontur, die durch eine druckseitige Schale (7) und eine saugseitige Schale (8), die starr damit verbunden ist, gebildet wird, wobei das Blatt einen Blattfuß (1), eine Blattspitze (2), eine Vorderkante (3) und eine Hinterkante (4) mit einer dazwischen verlaufenden Profilsehne umfasst, wobei die Schalen (7, 8) umfassen:
- wenigstens eine elektrische Verbinderschicht (5), die in einem ersten Abstand L1 von dem Blattfuß (1) angeordnet ist und von der Vorderkante (3) zu der Hinterkante (4) verläuft,
- wenigstens eine Heizelementschicht (6), die elektrisch in Kontakt mit der elektrischen Verbinderschicht (5) steht, wobei die Heizelementschicht (6) in einer Längsrichtung zwischen dem Blattfuß (1) und der Blattspitze (2) und näher an der Vorderkante (3) als an der Hinterkante (4) verläuft,
- Glasfasergewebeschichten (9) wenigstens nach innen hin in Kontakt mit der elektrischen Verbinderschicht (5) oder mit der Heizelementschicht (6),
- eine Verbinderkomponente (10), die quer durch die Glasfasergewebeschichten (9) verläuft und elektrisch mit der elektrischen Verbinderschicht (5) und mit einem Metallblock (11) verbunden ist,
- Stromkabel (13), die in Längsrichtung von einer Stromquelle nahe dem Blattfuß (1) zu der Verbinderkomponente (10) verlaufen, wobei eines dieser Stromkabel (13) elektrisch in Kontakt damit steht, wobei die Stromkabel (13) in wenigstens einer der Schalen (7, 8) angeordnet sind,
wobei die Metallblöcke (11) von einem Verbinder (12) durchbohrt sind, so dass die elektrischen Verbinderschichten (5) jeder Schale (7, 8) elektrisch verbunden sind und das Blatt durch die Heizelementschicht (6), wenn von der Stromquelle elektrisch gespeist, geheizt werden kann.

2. Windkraftanlagenblatt gemäß Anspruch 1, wobei jede Schale (7, 8) ferner zweite Glasfasergewebeschichten (9) nach außen hin in Kontakt mit der Heizelementschicht (6) oder der elektrischen Verbinderschicht (5) umfasst.

3. Windkraftanlagenblatt gemäß Anspruch 1, wobei die Heizelementschicht (6) nach außen hin in Kontakt mit der elektrischen Verbinderschicht (5) steht.

4. Windkraftanlagenblatt gemäß Anspruch 1, wobei die Heizelementschicht (6) nach innen hin in Kontakt mit der elektrischen Verbinderschicht (5) steht.

5. Windkraftanlagenblatt gemäß Anspruch 4, umfassend eine zweite elektrischen Verbinderschicht (5), die elektrisch und nach außen hin mit der elektrischen Verbinderschicht (5) in Kontakt steht und alternativ auch mit der Verbinderkomponente (10) elektrisch in Kontakt steht.

6. Windkraftanlagenblatt gemäß Anspruch 1, wobei jede Schale (7, 8) ferner eine zweite Heizelementschicht (6) umfasst, die elektrisch und nach außen hin mit der elektrischen Verbinderschicht (5) in Kontakt steht, wobei die zweite Heizelementschicht (6) zwischen der Vorderkante (3) und der Hinterkante (4) und benachbart zu der Heizelementschicht (6) verläuft.

7. Windkraftanlagenblatt gemäß Anspruch 1, wobei jede Schale (7, 8) eine Vielzahl von elektrischen Verbinderschichten umfasst, die über den Abstand L1 hinaus zwischen dem Blattfuß (1) und der Blattspitze (2) verlaufen, wobei jede elektrische Verbinderschicht elektrisch mit einer entsprechenden Heizelementschicht und einer Verbinderkomponente verbunden ist, die ihrerseits mit einem Metallblock und einem der Stromkabel elektrisch verbunden ist, so dass ein weiterer Bereich des Blatts unabhängig mit anderen Heizelementen geheizt werden kann.

8. Windkraftanlagenblatt gemäß Anspruch 1, wobei der Heizelement eine Kohlenstofffaser mit einer biaxialen Struktur, ±45° relativ zu der Längsrichtung des Blatts, ein Kohlenstoffvlies oder ein beliebiges Verbundgewebe, das leitfähige Komponenten enthält, ist.

9. Windkraftanlagenblatt gemäß Anspruch 1, wobei das elektrische Verbinder ein Kupfer- oder Aluminiumnetz oder ein beliebiges Verbundmaterial mit metallischen Zusätzen oder Drähten ist.

10. Windkraftanlagenblatt gemäß Anspruch 1, wobei der elektrische Verbinder 20-400 mm breit und 50-500 µm dick ist.

11. Verfahren zur Herstellung des Blatts gemäß Ansprüchen 1-10, wobei bei der Herstellung jeder Schale (7, 8) das Verfahren wenigstens umfasst:
a) Anordnen einer elektrischen Verbinderschicht (5) auf einem Formwerkzeug mit dem Konturprofil der entsprechenden Schale (7, 8) und Verbinden der elektrischen Verbinderschicht (5) mit der Verbinderkomponente (10) davon,
b) Aufbringen von Glasfasergewebeschichten (9) auf eine Weise, bei der sie nach innen hin oder nach außen hin in Kontakt mit der elektrischen Verbinderschicht (5) stehen, so dass sie, wenn nach außen hin in Kontakt, vor der elektrischen Verbinderschicht (5) in dem Formwerkzeug angeordnet werden, und wenn nach innen hin in Kontakt, nach der elektrischen Verbinderschicht (5) in dem Formwerkzeug angeordnet werden.

12. Verfahren zur Herstellung gemäß Anspruch 11, umfassend den Schritt des Montierens und/oder Verbindens des Metallblocks (11) und der Stromkabel (13) mit der Verbinderkomponente (10) während oder nach der Herstellung jeder Schale (7, 8).

13. Verfahren zur Herstellung gemäß Anspruch 11, umfassend den Schritt des Aufbringens einer Heizelementschicht (6) nach außen hin oder nach innen hin elektrisch in Kontakt mit der elektrischen Verbinderschicht (5) während der Herstellung jeder Schale (7, 8) und vor dem Infundieren und Härten der Schale.

14. Verfahren zur Herstellung gemäß einem der Ansprüche 11-13, umfassend den Schritt des Aufbringens eines Kunststoff-Klebebands (14) in einem Bereich auf der Vorderkante (3) während der Herstellung jeder Schale (7, 8) und vor dem Entformen, und nachdem die Schalen (7, 8) starr miteinander verbunden worden sind, Aufbringen einer Heizelementschicht (6) auf den Bereich, an dem das Kunststoff-Klebeband (14) ursprünglich angeordnet war.

15. Verfahren zur Herstellung gemäß einem der Ansprüche 11-14, wobei, nachdem die Schalen (7, 8) starr verbunden worden sind, die Metallblöcke (13) mit dem Verbinder (12) durchbohrt werden.

## Revendications

1. Pâle pour un rotor d'une éolienne, comprenant un contour profilé formé par une coque côté pression (7) et une coque côté aspiration (8) assemblées rigidement entre elles, ladite pâle comprenant un pied de pâle (1), une extrémité de pâle (2), un bord d'attaque (3) et un bord de fuite (4) avec une corde s'étendant entre ceux-ci, lesdites coques (7, 8) comprenant :
- au moins une couche de connecteur électrique (5) située à une première distance L1 du pied de pâle (1) et s'étendant du bord d'attaque (3) vers le bord de fuite (4),
- au moins une couche d'éléments chauffants (6) électriquement en contact avec la couche de connecteur électrique (5), ladite couche d'élément chauffant (6) s'étendant dans une direction longitudinale entre le pied de pâle (1) et l'extrémité de pâle (2) et plus près du bord d'attaque (3) que du bord de fuite (4),
- des couches de tissu de verre (9) en contact au moins à l'intérieur avec la couche de connecteur électrique (5) ou avec la couche d'éléments chauffants (6),
- un composant de connecteur (10) s'étendant transversalement à travers les couches de tissu de verre (9) et étant électriquement connecté à la couche de connecteur électrique (5) et à un bloc métallique (11),
- des fils d'alimentation (13) s'étendant longitudinalement à partir d'une source d'alimentation à côté du pied de pâle (1) jusqu'au composant de connecteur (10), l'un de ces fils d'alimentation (13) étant électriquement en contact avec celui-ci, lesdits fils d'alimentation (13) étant situés dans au moins une des coques (7, 8),
dans laquelle les blocs métalliques (11) sont percés par un inter-connecteur (12) de telle manière que les couches de connecteur électrique (5) de chaque coque (7, 8) sont électriquement connectées et la pâle peut être chauffée par la couche d'éléments chauffants (6) lorsqu'elle est alimentée électriquement par la source d'alimentation.

2. Pâle d'éolienne selon la revendication 1, dans laquelle chaque coque (7, 8) comprend en outre des deuxièmes couches de tissu de verre (9) extérieurement en contact avec la couche d'éléments chauffants (6) ou la couche de connecteur électrique (5).

3. Pâle d'éolienne selon la revendication 1, dans laquelle la couche d'éléments chauffants (6) est en contact à l'extérieur avec la couche de connecteur électrique (5).

4. Pâle d'éolienne selon la revendication 1, dans laquelle la couche d'éléments chauffants (6) est en contact à l'intérieur avec la couche de connecteur électrique (5).

5. Pâle d'éolienne selon la revendication 4, comprenant une deuxième couche de connecteur électrique (5) électriquement en contact vers l'extérieur avec la couche de connecteur électrique (5) et, facultativement, étant en outre électriquement en contact avec le composant de connecteur (10).

6. Pâle d'éolienne selon la revendication 1, dans laquelle chaque coque (7, 8) comprend en outre une deuxième couche d'élément chauffant (6) électriquement en contact à l'extérieur avec la couche de connecteur électrique (5), ladite deuxième couche d'élément chauffant (6) s'étendant entre le bord d'attaque (3) et le bord de fuite (4) et de façon adjacente à la couche d'élément chauffant (6).

7. Pâle d'éolienne selon la revendication 1, dans laquelle chaque coque (7, 8) comprend une pluralité de couches de connecteur électrique s'étendant entre le pied de pâle (1) et l'extrémité de pâle (2) au-delà de la distance L1, dans laquelle chaque couche de connecteur électrique est électriquement connectée à une couche d'élément chauffant correspondante et à un composant de connecteur, qui à son tour est connecté électriquement à un bloc métallique et à l'un des fils d'alimentation, afin qu'une autre région de la pâle puisse être chauffée indépendamment avec des éléments chauffants différents.

8. Pâle d'éolienne selon la revendication 1, dans laquelle l'élément chauffant est une fibre de carbone ayant une structure biaxiale, à ± 45° par rapport à la direction longitudinale de la pâle, un voile de carbone ou un quelconque tissu composite incluant des composants conducteurs.

9. Pâle d'éolienne selon la revendication 1, dans laquelle le connecteur électrique est un maillage de cuivre ou d'aluminium ou un quelconque matériau composite comprenant des adjuvants ou des fils métalliques.

10. Pâle d'éolienne selon la revendication 1, dans laquelle le connecteur électrique a une largeur de 20 à 400 mm et une épaisseur de 50 à 500 µm.

11. Procédé de fabrication de la pâle selon les revendications 1 à 10, dans lequel, durant la fabrication de chaque coque (7, 8), le procédé comprend au moins :
a) la mise en place d'une couche de connecteur électrique (5) sur un moule ayant le profil de contour de la coque correspondante (7, 8) et la connexion de ladite couche de connecteur électrique (5) au composant de connecteur (10) de celle-ci,
b) l'application de couches de tissus de verre (9) de manière à les placer en contact vers l'intérieur ou vers l'extérieur par rapport à ladite couche de connecteur électrique (5), de telle façon que lorsqu'elles sont en contact vers l'extérieur, elles soient placées dans le moule avant la couche de connecteur électrique (5) et lorsqu'elles sont en contact vers l'intérieur, elles soient placées dans le moule après la couche de connecteur électrique (5).

12. Procédé de fabrication selon la revendication 11, comprenant l'étape d'installation et/ou de connexion du bloc métallique (11) et des fils d'alimentation (13) au composant de connecteur (10) durant ou après la fabrication de chaque coque (7, 8).

13. Procédé de fabrication selon la revendication 11, comprenant une étape d'application d'une couche d'élément chauffant (6) électriquement en contact vers l'extérieur ou vers l'intérieur avec la couche de connecteur électrique (5), pendant la fabrication de chaque coque (7, 8) et avant l'infusion et le durcissement de la coque.

14. Procédé de fabrication selon l'une quelconque des revendications 11 à 13, comprenant l'étape d'application d'un ruban adhésif plastique (14) dans une région sur le bord d'attaque (3) durant la fabrication de chaque coque (7, 8) et avant le démoulage, et après que les coques (7, 8) ont été assemblées rigidement, l'application d'une couche d'éléments chauffants (6) sur la région où le ruban adhésif plastique (14) a été initialement placé.

15. Procédé de fabrication selon l'une quelconque des revendications 11 à 14, dans lequel après que les coques (7, 8) ont été assemblées rigidement, les blocs métalliques (13) sont percés avec l'inter-connecteur (12).
